# EUROPEAN PATENT APPLICATION

(11) **EP 4 811 062 A1**
(43) Date of publication of application: **23.09.2026**
(21) Application number: 25164821.8
(22) Date of filing: 19.03.2025
(51) Int. Cl.: G05B 23/02

(54) **METHOD FOR ACQUISITION OF MACHINE DATA IN A MACHINE**

(71) Applicant: ABB SCHWEIZ AG, 5400 Baden (CH)
(72) Inventor: Almeder, Alexander, 3910 Zwettl (AT); Brucker, Stefan, 5020 Salzburg (AT); Steinhauser, Armin, 4040 Linz (AT)
(74) Representative: Weiss Patentanwalts GmbH

(57) **Abstract**

In order to allow acquisition of machine data (MD) in a more flexible and easier way, it is provided, that the data interface (4-n) of a data source unit (2-n) collecting machine data (MD) is arranged for configuration of the selection of which machine data (MD) is collected in the data source unit (2-n) from the machine (6) and/or of the machine data collection rate (CR) of the machine data (MD) collected in the data source unit (2-n) during the machine operation.

## Description

The present invention pertains to a method for acquisition of machine data in a machine at least during machine operation, comprising a data source unit collecting machine data and a data acquisition unit acquiring collected machine data, wherein the data source unit is connected to the data acquisition unit via a data interface of the data source unit and the data source unit sends collected machine data via the data interface to the data acquisition unit, wherein the data acquisition unit executing data processing software that processes collected machine data received from the data source unit, and wherein it is configured in the data interface of the data source unit which machine data is collected and with which machine data collection rate this machine data is collected. The invention also pertains to a data source unit used in the method for acquisition of machine data.

Nowadays, it is common in machine applications that machine data is collected at a low level in the machine, typically at high sample rates. In this application, "machine" is to be interpreted in a broad sense and is to be understood as any physical system that uses power (electrical, hydraulic, pneumatic, magnetic or any other physical principle) to apply forces (comprising also torques) and/or control movement or a machine part or a machine function to perform an action.

In this application, the term "machine data" refers to data representing a single physical quantity that is collected, like speed, force, power, electrical current, electrical voltage, position, temperature, etc. Machine data is a time sequence of data values of the collected physical quantity collected at certain points in time, like 5 m/s, 100 N, 1.5 kW, 2.5 A, 55 V, 4 m, 25 °C etc, i.e. with a certain machine data collection rate. Usually, the machine data is collected with a certain collection rate, like with a frequency of 10 kHz or 1 MHz. "Multiple machine data" means that more than one single physical quantity is collected, wherein the more than one physical quantity can be the same quantity, like the temperature or electric current at different locations, or different physical quantities, like the temperature and the electrical current. "To collect machine data" means that the machine data is measured using a corresponding sensor for the respective physical quantity, like a speed sensor, a force sensor, a power sensor, a current sensor, a voltage sensor, a position sensor, a temperature sensor, etc., or that the machine data is determined or computed from other available data (like available sensor data). For example, electrical power can be measured directly or can be computed from electrical current and voltage, which in turn could be measured. "To collect machine data" can also mean, that the machine data is estimated from other available data, using a well-known observer, for example.

The collected machine data is usually used for controlling functions or actions of the machine, usually also at a low level, i.e. close the function to be controlled. But machine data collected by data source units is often also sent to higher level data acquisition and processing units, like a Supervisory Control and Data Acquisition (SCADA), a Manufacturing Execution System (MES) or Enterprise Resource Planning (ERP), a production management, a process controller, just to name a few, collectively also called supervisory control unit. The collected machine data is often processed in the supervisory control unit using data analysis methods, like statistical data analysis, artificial intelligence etc., or used for generation of reports, for plant maintenance or even management functions or also for providing high level control of the machine. Typical examples are the generation of downtime reports, condition monitoring of parts of the machine, adaptive maintenance of parts of the machine, product quality analysis, adaptive control, process control etc. To this end, the supervisory control unit is usually a computer system that runs data processing software that acquires collected machine data and performs the required data analysis with the collected machine data.

In a typical implementation, a machine is structured in hierarchical control levels as a distributed control system (DCS). In this hierarchy the higher levels for supervisory control are linked to the direct control of lower level control units, like programmable logic controllers (PLC), of the DCS. The control units directly control the components in the machine at the lower control level such as actuators, electric motors, signalling devices, switches, valves, contactors etc. and collect machine data using sensors, for example. The collected machine data is sent to higher level control units, especially to a supervisory control unit, for further processing.

In an example, the machine could be a well-known long stator linear motor (LLM) or planar motor (PLM) drive system with multiple shuttles moved by the linear motor in a defined movement area (a one-dimensional route in case of a LLM or a two-dimensional plane in case of a PLM). The LLM or PLM generates different machine data, like thrust forces acting on the shuttles, values of electrical currents flowing through drive coils of the motor stator, temperature values at different locations, power consumption etc. The generated and collected machine data is used by a higher level supervisory control unit for condition monitoring of the condition of the shuttles, for planning shuttle maintenance, for shuttle route planning etc.

The above implies that the machine data collected at lower machine levels by data source units has to be sent to a higher level data acquisition unit for further processing or usage. This is usually done via a data communication network, like a field bus. A major problem in this connection is the naturally limited data bandwidth of the data communication network, i.e. there can only be sent a certain amount of data values over the data communication network in a certain time. A machine can produce high amounts of machine data and multiple machine data and it can be problematic or even impossible to send all the respective data values over the data communication network with the required transmission rate.

There are of course known methods to reduce the network traffic on the data communication network, like pre-processing of the collected data at lower level and only sending the preprocessed data to the higher level or data compression at the lower level and sending the compressed data to the higher level. The problem with this approach is that all such methods need to be defined in advance and need to be programmed into the lower level devices, like into the firmware of a PLC, for example. This needs thorough planning and increases the difficulties in implementing machine applications, especially for complex machines. Furthermore, this approach does not provide any flexibility whatsoever as a later change in how collected machines data is to be processed on lower machine levels is hardly possible or at least requires quite some effort. The same applies when other or additional machine data is needed at higher level application.

There is therefore a need for providing a method of acquisition of machine data in a more flexible and easier way.

According to the invention, the data interface of the data source unit is configured for configuration of the selection of which machine data is collected in the data source unit and/or of the machine data collection rate of the machine data collected in the data source unit during the machine operation. This means that the data source unit is implemented to allow the data interface to be configured during operation of the machine. Therefore, it is no longer necessary to stop the machine or to reprogram the data interface to reconfigure the machine data collection. With such a data source unit, it can easily and flexibly reacted on changing machine data needs during operation of the machine.

For generating machine data it is advantageous that at least one machine sensor of the machine is provided that produces sensor values, in that the machine sensor sends the produced sensor values to the data source unit, and in that the data source unit uses the received sensor values for collecting machine data.

In an advantageous implementation (as software) of the data source interface at least one data point is configured in the data interface of the data source unit, the data point being assigned to a number of selected machine sensors of the at least one machine sensor and receives the sensor values from the number of selected machine sensors for collecting machine data. A data point can be generated as software which allows that the data point is simply added, removed or changed during operation of the machine.

This allows that the configuration of the selection of which machine data is collected in the data source unit is changed during machine operation by adding a new data point assigned to a number of selected machine sensors of the at least one machine sensor or by changing the assignment of the data point to the number of selected machine sensors of the at least one machine sensor or by deleting a data point whereas at least one data point remains in the data interface.

In an advantageous implementation (as software) of the data source interface at least on sampling point is configured in the data interface of the data source, the sampling point being assigned to one of the at least one data points and receiving machine data from the assigned data point and in that the sampling point being configured to send the received machine data as collected machine data with the configured machine data collection rate to the data acquisition unit. This allows that the configuration of the machine data collection rate in the data source unit is changed during machine operation simply by setting a new machine data collection rate in the sampling point.

In an advantageous implementation (as software) of the data source interface at least on sampling point is configured in the data interface of the data source, the sampling point being assigned to one of the at least one data points and receiving machine data from the assigned data point, in that a preprocessing function being defined in the sampling point, the preprocessing function receiving the machine data from the assigned data point and performing the defined preprocessing function with the received machine data as input, whereas an output of the preprocessing function being used as collected machine data, and in that the sampling point being configured to send the collected machine data with the configured machine data collection rate to the data acquisition unit. The preprocessing function adds flexibility to the data collection as machine data can now flexibly be preprocessed before being sent to the data acquisition unit. This alleviates the data acquisition unit in terms of required computational power as certain computations can now be performed at lower level directly in the data source unit. Apart from that, applying a preprocessing function, also the amount of data that needs to be sent form the data source unit to the data acquisition unit can be reduced which alleviates the data communication network.

Using a preprocessing function, also allows to change the configuration of the selection of which machine data is collected in the data source unit during machine operation by simply changing the preprocessing function in the sampling point.

Data interface in the data source unit is advantageously configured at least partly by the data processing software executed in the data acquisition unit. This allows at least semiautomatic configuration of the data interface by the data processing software according to its (changing) needs.

To this end, the data interface of the data source unit may provide a list of all machine data available in the data source unit to the data acquisition unit. The data processing software of the data acquisition unit specifies which machine data from the list of all available machine data it requires and with which machine data collection rate the machine data is to be collected, and in that the data interface of the data source unit is configured to collect the required machine data with the required machine data collection rate as required by the data processing software executed in the data acquisition unit via a configuration interface of the data source unit. Additionally, the data interface of the data source unit may further provide a list of all available preprocessing functions for preprocessing machine data. The data processing software further specifies with which preprocessing function the machine data is to be preprocessed by the data source unit before the machine data is sent to the data acquisition unit as collected machine data, and in that the data interface of the data source unit is configured to preprocess the machine data as specified by the data processing software via the configuration interface of the data source unit.

The data traffic can be further reduced or optimized when the data interface in the data source unit comprises a data buffer, and when the data source unit stores collected machine data in the data buffer. The data acquisition unit then receives collected machine data from the data buffer of the data source unit. The data source unit may send stored collected machine data from the data buffer to the data acquisition unit in predefined time steps, or in that the data acquisition unit requests the data source unit to send stored collected machine data from the data buffer to the data acquisition unit. This allows, for example, that collected machine data may be sent in greater data packets which reduces network traffic due to reduced data overhead (defined by the implemented communication protocol).

The present invention is described below in greater detail with reference to Figs.1 to 4 which show schematic and non-limiting advantageous embodiments of the invention by way of example. In the drawings:
Fig.1 shows an arrangement making use of the inventive data acquisition method,
Fig.2 shows a possible implementation of a data source unit,
Fig.3 shows an embodiment of a data interface and
Fig.4 shows a possible implementation of a configuration of a data interface of a data source unit.

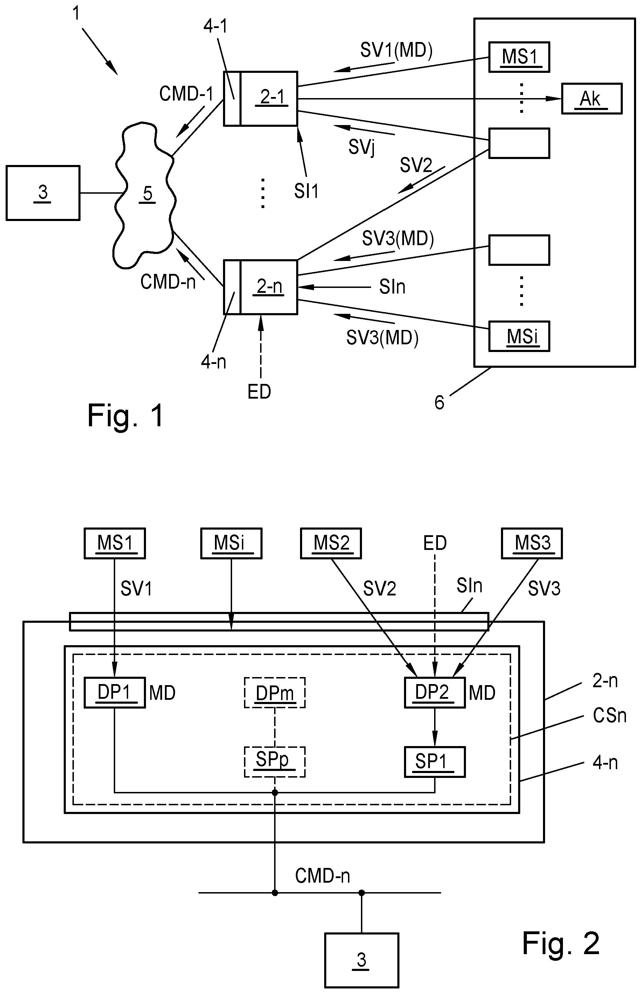

Fig.1 exemplary shows an arrangement 1 for the acquisition of machine data of a machine of a machine 6 in accordance with the present invention. The arrangement 1 comprises a number n ≥ 1 of data source units 2-n and at least one data acquisition unit 3. "n" is used as index and refers to the n-th data source unit 2-n. Each data source unit 2-n collects machine data MD from the machine 6 and sends collected machine data CMD-n to the data acquisition unit 3. To this end, each data source unit 2-n comprises a data interface 4-n via which the data source unit 2-n is connected to the data acquisition unit 3. The data source unit 2-n can be connected to the data acquisition unit 3 by a data communication network 5 of any kind, like a data bus or field bus, for example.

The data communication network 5 can be any suitable (wired or wireless or mixed) network, like an Ethernet network, using any suitable network protocol for data communication, like POWERLINK, PROFINET, Ethercat, OpenSafety, Ethernet/IP and so on.

A data source unit 2-n sends its collected machine data CMD-n to the data acquisition unit 3 via its data interface 4-n and the data communication network 5 connected to the data interface 4-n and the data acquisition unit 3. The collected machine data CMD-n comprises machine data MD and may comprise multiple machine data MD.

There might be more than one data acquisition unit 3 present. In this case, each data acquisition unit 3 can be connected to a number of data source units 2-n and can receive (the same or different) collected machine data CMD-n from the connected data source units 2-n. Therefore, a data source unit 2-n may also be connected to more than one data acquisition unit 3.

Machine data MD can be generated by machine sensors MSi that are applied to certain parts of a machine 6. "i" is used as index and refers to the i-th machine sensor MSi. A machine sensors MSi captures values of a certain physical quantity, like speed, force, power, electrical current, electrical voltage, position, acceleration, temperature, etc., measured at a certain part of the machine 6. A sensor value represents a certain physical quantity at a specific time. The captured sensor values may directly be used as machine data MD. Machine data MD may however also be determined or computed in a data source unit 2-n from other available data, like from captured sensor values SVj or also from received external data ED (indicated in dashed line in Fig.1). "j" is used as index and refers to the j-th captured sensor value SVj. This encompasses also computing machine data MD using models or simulations. For example, force can be directly measured or can be computed from measured acceleration. It is also possible that the machine data MD is estimated in a data source unit 2-n from other available data, like from captured sensor values SVj and/or from external data ED, using a well-known observer, for example.

A machine sensor MSi may also deliver sensor values SVj or machine data MD to more than one data source unit 2-n.

A data source unit 2-n is preferably implemented as microprocessor-based hardware, like a microcontroller, a programable logic controller (PLC), a computer etc., that is able to execute software, in the form of firmware, for example. For collecting machine data MD, the data source unit 2-n runs machine data collection software.

A data source unit 2-n may also be used as control unit to control a certain part or function of the machine 6. In this case, the data source unit 2-n could be a PLC, for example. For controlling a certain part or function of the machine 6, the data source unit 2-n would also be connected to an actuator Ak (in Fig.1 shown for data source unit 2-1) of the machine 6 that would be controlled by the data source unit 2-n in order to perform the desired machine operation. "k" is used as index and refers to the k-th actuator.

The data acquisition unit 3 acquires collected machine data CMD-n from the data source units 2-n. The data acquisition unit 3 executes data processing software that processes acquired collected machine data CMD-n received from the data source units 2-n. To this end, the data acquisition unit 3 is a microprocessor-based hardware, like a computer, that is able to run the data processing software. The data processing software may be used to implement data analysis methods, like statistical data analysis, artificial intelligence etc., or may be used for generation of reports, for plant maintenance, for management functions or for providing high level control of the machine 6 and so on.

Usually, a data acquisition unit 3, or the data processing software running on the data acquisition unit 3, only requires certain machine data MD for its own needs. Therefore, it is configured in the data interface 4-n of a data source unit 2-n which of the available machine data MD is collected as collected machine data CMD-n and with which machine data collection rate this machine data MD is collected and sent to the data acquisition unit 3. This is usually fixedly programmed into the data source unit 2-n, like into a firmware of a data source unit 2-n, for example. This, however, means that it is hardly possible or only possible with quite some effort, to change this. Changing this during machine operation has been impossible so far.

According to the invention, the data interface 4-n of a data source unit 2-n is configured for configuration of the selection of which machine data MD is collected in the data source unit 2-n and/or of the machine data collection rate of collected machine data CMD-n in the data source unit 2-n during the machine operation.

This means that it can be configured in the data interface 4-n of a data source unit 2-n which machine data MD is collected by the data source unit 2-n. A data source unit 2-n is usually connected to several machine sensors MSi and receives sensor values SVj from the machine sensor MSi. But not each of the sensor values SVj must be used in the data source unit 2-n as machine data MD to be collected or to determine or compute or estimate machine data MD. Some sensor values SVj may only be used to control a machine function, for example. Furthermore, it can be configured in the data interface 4-n of a data source unit 2-n with which machine data collection rate the machine data MD is collected. This configuration can be done during machine operation. Therefore, it is possible to change the machine data MD and/or the machine data collection rate on the fly during operation of the machine. To this end, the machine data collection software CSn in the data source unit 2-n is programmed to allow this change during operation of the machine 6. Hence, it is not necessary to stop operation of the machine for such a change and it is not necessary to reprogram the software running in the data source unit 2-n to perform such a change. The machine data collection software CSn is already programmed to allow re-configuration of which machine data MD is collected and/or with which machine data collection rate the machine data MD is collected.

Fig.2 shows a possible implementation of a data source unit 2-n for collecting machine data MD. The data source unit 2-n is connected to at least one, usually several, machine sensor MSi and receives sensor values SVj from the connected machine sensors MSi. To this end, the data source unit 2-n may comprise a sensor interface SIn which allows connection of a number of machine sensors MSi to the data source unit 2-n via sensor input ports of the sensor interface SIn. The sensor interface SIn can be configured to receive analogue or digital sensor values SVj from connected machine sensors MSi. The data source unit 2-n may also receive external data ED, as mentioned above. The data source unit 2-n runs machine data collection software CSn (indicated by dashed line in Fig.2). The machine data collection software CSn allows configuration of a number of data points DPm. "m" is used as index and refers to the m-th data point.

Each data point DPm in the data interface 4-n of a data source unit 2-n is assigned to at least one selected sensor input port of the sensor interface SIn and consequently in use of the arrangement 1 to at least one selected connected machine sensor MSi and receives the sensor values SVj from the selected at least one machine sensor MSi for collecting machine data MD (as described above).

In the embodiment of Fig.2, data point DP1 is connected to machine sensor MS1 and receives sensor values SV1 that are used as machine data MD. Data point DP2 is connected to machine sensors MS2, MS3 and receives sensor values SV2, SV3 that are used in the data point DP2 to determine (compute, estimate, for example) machine data MD. Data point DP2 may also use external data ED for determining machine data MD.

The configuration of the selection of which machine data MD is collected in the data source unit 2-n can be changed during machine operation by adding a new data point DPm (indicated in dashed line) assigned to a number of selected sensor input ports (and in use of the arrangement 1 to a number of machine sensors MSi), or by changing the assignment of already present data point DPm to the number of selected sensor input ports (and in use of the arrangement 1 to a number of machine sensors MSi) or by deleting a data point DPm whereas at least one data point DPm remains in the data interface 4-n.

In the embodiment of Fig.2, data point DPm could be added to the data interface 4-n of a data source unit 2-n. Alternatively, data point DP1, DP2 could be connected to another or a different sensor input port of the sensor interface SIn and by that to another or different machine sensor MSi. Alternatively, connection of data point DP2 to machine sensor MS2 could be removed.

In a further preferred embodiment, at least on sampling point SPp is configured in the data interface 4-n of the data source 2-n. "p" is used as index and refers to the p-th sampling point. Each sampling point SPp is assigned to one of the at least one data points DPm and receivs machine data MD from the assigned data point DPm. Not every data point DPm must be assigned to a sampling point SPp. Each of the sampling points SPp is configured to send the machine data MD received from the assigned data point DPm as collected machine data CMD-n with the configured machine data collection rate to the data acquisition unit 3 (as for data point DP2 in Fig.2). When no sampling point SPp is assigned to a data point DPm, then the data point DPm sends its machine data MD as collected machine data CMD-n with the configured machine data collection rate to the data acquisition unit 3 (as for data point DP1 in Fig.2).

The configuration of the machine data collection rate in the data source unit 2-n can be changed during machine operation by setting a new machine data collection rate in a sampling point SPp.

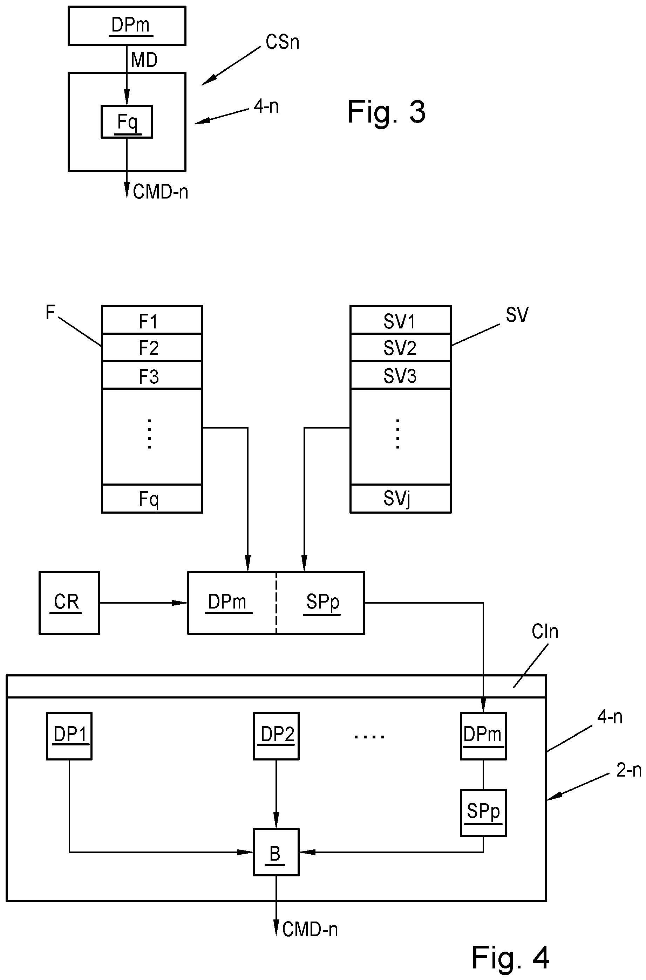

In a preferred embodiment, at least one sampling point SPp is configured in the data interface 4-n of a data source unit 2-n. The configured sampling point SPp is assigned to one of the configured data points DPm and receivs machine data MD from the assigned data point DPm. In the configured sampling point SPp a preprocessing function Fq is defined (Fig.3). "q" is used as index and refers to the q-th preprocessing function. The preprocessing function Fq is preferably implemented as software, especially in the machine data collection software CSn. The defined preprocessing function Fq receives the machine data MD from the assigned data point DPm and performs the defined preprocessing function Fq with the received machine data MD as input. The output of the preprocessing function Fq is then used as collected machine data CMD-n. The sampling point SPp with the preprocessing function Fq is configured to send the preprocessed machine data MD as collected machine data CMD-n with the configured machine data collection rate to the data acquisition unit 3.

A preprocessing function Fq is typically a mathematical function. In general, a mathematical function assigns a defined output (value) to a number of inputs (values). A mathematical function can be a statistical function, such as mean, min, max, median, variance, skewness, kurtosis etc., or an algebraic, polynomial, trigonometrical function or even an integral or differential, or any other mathematical function.

Usually, the preprocessing function Fq is applied to a specified time sequence of data values of the received machine data MD, whereas the time sequence is defined by the machine data collection rate. This means that the preprocessing function Fq is calculated with the frequency of the machine data collection rate so that new collected machine data CMD-n is available with the frequency of the machine data collection rate.

In the example of Fig.3, the machine data MD could be provided with a sample rate of 800µs (defined by the connected machine sensor MSi, for example). As preprocessing function Fq the median(x) function could be used with the machine data collection rate of 8ms. In this case 10 machine data values would be used to calculate the collected machine data CMD-n with a machine data collection rate of 125 Hz.

In using a preprocessing function Fq, the machine data MD gets compressed at the same time. The machine data MD is preprocessed by the data source unit 2-n which reduces the data traffic on the data communication network 5 and at the same time alleviates the computational requirements at the data acquisition unit 3.

By changing the machine data collection rate in the data source unit 2-n collection of machine data MD can simply be adapted to new or changed requirements during operation of the machine 6. Collection of machine data MD can also be changed by changing the preprocessing function Fq in a sampling point SPp.

The data interface 4-n in the data source unit 2-n can be configured during machine operation by an operator of the machine 6 or also by the data acquisition unit 3. For example, the data processing software executed in the data acquisition unit 3 can be provided to at least partly configure the data interface 4-n via a configuration interface CIn of the data source unit 2-n. The operator may configure the data interface 4-n also via a configuration interface Cln of the data source unit 2-n.

The data processing software executed in the data acquisition unit 3 knows which collected machine data CMD-n it requires, especially according to the needs of the data analysis needed in the data acquisition unit 3.

A possible configuration is described with reference to Fig.4. At least one sensor value SVj is selected from a list SV of available machine sensor MSi sensor values SVj. Alternatively or additionally, machine data MD can be selected from a list of available machine data MD, that is connected to certain sensor values SVj. Optionally, a preprocessing function Fq is selected from a list F of available preprocessing functions. A required machine data collection rate CR is set. Then a new data point DPm, optionally with an assigned sampling point SPp, is created (as software). The newly created data point DPm, optionally with an assigned sampling point SPp, is added to the already existing data points via the configuration interface Cln. Upon starting the new data point DPm in the data interface 4-n, new machine data MD is collected and new collected machine data CMD-n is sent to the data acquisition unit 3 with the machine data collection rate CR.

In a possible implementation, the data interface 4-n of the data source unit 2-n provides a list of all machine data MD, possibly in form of available sensor values SVj of available machine sensors MSi, available in the data source unit 2-n to the data acquisition unit 3. The data processing software of the data acquisition unit 3 specifies which machine data MD from the list of all available machine data MD it requires and with which machine data collection rate CR the machine data MD is to be collected. The data interface 4-n of the data source unit 2-n is configured via the configuration interface CIn to collect the required machine data MD with the required machine data collection rate CR as required by the data processing software executed in the data acquisition unit 3.

In a further embodiment of the invention, a data interface 4-n can be configured to generate collected machine data CMD-n only in the event of an additional specified machine condition, for example when a switch is activated or a shuttle of a LLM or PLM is in a certain area of the LLM or PLM.

In another possible implementation of the invention, the collected machine data CMD-n is not sent directly by a sampling point SPp or a data point DPm to the data acquisition unit 3, but via a data buffer B, as shown in Fig.4. In such an embodiment, the data interface 4-n in the data source unit 2-n comprises a data buffer B, in which collected machine data CMD-n is stored. The data acquisition unit 3 receives collected machine data CMD-n from the data buffer B of the data source unit 2-n. This can be achieved, in that the data source unit 2-n sends stored collected machine data CMD-n from the data buffer B to the data acquisition unit 3 in predefined time steps, or in that the data acquisition unit 3 requests the data source unit 2-n to send stored collected machine data CMD-n from the data buffer D to the data acquisition unit 3.

In the following a possible use case of the invention is described on the example of a LLM with a number of shuttles as machine 6. The LLM has a stator comprising several stator segments. For each stator segment, a data source unit 2-n is provided. Each data source unit 2-n collects machine data MD from the respective stator segment. On each stator segment several machine sensors MSi are provided and connected to the respective data source unit 2-n. Possible machine sensors MSi are a speed sensor for detecting shuttle speed, position sensor or detecting position of a shuttle (which can also be used to determine shuttle speed), current sensor for detecting electrical coil currents of stator coils, a sensor for detecting power supply current, etc. Each data source unit 2-n is configured with a base configuration comprising certain machine data MD to be collected. This basic machine data MD can be stator related data for condition monitoring of a stator segment with the data processing software that is collected during normal operation of the LLM. When a sudden change or a certain trend of collected machine data CMD-n is noticed in the data processing software executed in the data acquisition unit 3, the data collection can be reconfigured to take a closer look at a certain stator segment. Reconfiguration could for example mean that also shuttle-related machine data is additionally collected. For example acting forces could be determined on basis of coil currents and shuttle speed. After reconfiguration, the additional collected machine data CMD-n would be immediately available in the data acquisition unit 3 without the need to stop the machine 6 or to reprogram the data source unit 2-n. With the additional data it is possible to distinguish between an overall degradation condition and single shuttles showing signs of degradation. In the latter case, it would be possible to take the data collection even one step further again by reconfiguration of the data interface 4-n of the data source unit 2-n. This reconfiguration could aim at collecting very specific data of only those shuttles showing signs of degradation. All these steps could be automated based on an algorithm that scrutinizes the respective data, distinguish different cases and trigger the required reconfigurations. For reconfiguration, prepared data collection templates could be stored in the data acquisition unit 3 that only need to be loaded and implemented.

## Claims

1. Method for acquisition of machine data of a machine (6) at least during machine operation, comprising
a data source unit (2-n) collecting machine data (MD) and
a data acquisition unit (3) acquiring collected machine data (CMD-n),
wherein the data source unit (2-n) is connected to the data acquisition unit (3) via a data interface (4-n) of the data source unit (2-n) and the data source unit (2-n) sends collected machine data (CMD-n) via the data interface (4-n) to the data acquisition unit (3),
wherein the data acquisition unit (3) executing data processing software that processes collected machine data (CMD-n) received from the data source unit (2-n),
wherein it is configured in the data interface (4-n) of the data source unit (2-n) which machine data (MD) is collected and with which machine data collection rate (CR) this machine data (MD) is collected,
**characterized, in that**
the data interface (4-n) of the data source unit (2-n) is arranged for configuration of the selection of which machine data (MD) is collected in the data source unit (2-n) and/or of the machine data collection rate (CR) of the machine data (MD) collected in the data source unit (2-n) during the machine operation.

2. Method according to claim 1, **characterized, in that** at least one machine sensor (MSi) of the machine (6) produces sensor values (SVi), **in that** the at least one machine sensor (MSi) sends the produced sensor values (SVi) to the data source unit (2-n), **and in that** the data source unit (2-n) uses the received sensor values (SVi) for collecting machine data (MD).

3. Method according to claim 2, **characterized, in that** at least one data point (DPm) is configured in the data interface (4-n) of the data source unit (2-n), the data point (DPm) being assigned to a number of selected machine sensors (MSi) of the at least one machine sensor (MSi) and receives the sensor values (SVi) from the number of selected machine sensors (MSi) for collecting machine data (MD).

4. Method according to claim 3, **characterized, in that** the configuration of the selection of which machine data (MD) is collected in the data source unit (2-n) is changed during machine operation by adding a new data point (DPm) assigned to a number of selected machine sensors (MSi) of the at least one machine sensor (MSi) or by changing the assignment of the data point (DPm) to the number of selected machine sensors (MSi) of the at least one machine sensor (MSi) or by deleting a data point (DPm) whereas at least one data point (DPm) remains in the data interface (4-n).

5. Method according to claim 3 or 4, **characterized, in that** at least on sampling point (SPp) is configured in the data interface (4-n) of the data source (2-n), the at least one sampling point (SPp) being assigned to one of the at least one data points (DPm) and receiving machine data (MD) from the assigned data point (DPm), **and in that** the sampling point (SPp) being configured to send the received machine data (MD) as collected machine data (CMD-n) with the configured machine data collection rate (CR) to the data acquisition unit (3).

6. Method according to claim 3 or 4, **characterized, in that** at least on sampling point (SPp) is configured in the data interface (4-n) of the data source (2-n), the sampling point (SPp) being assigned to one of the at least one data points (DPm) and receiving machine data (MD) from the assigned data point (DPm), **in that** a preprocessing function (Fq) being defined in the sampling point (SPp), the preprocessing function (Fq) receiving the machine data (MD) from the assigned data point (DPm) and performing the defined preprocessing function (Fq) with the received machine data (MD) as input, whereas an output of the preprocessing function (Fq) being used as collected machine data (CMD-n), **and in that** the sampling point (SPp) being configured to send the collected machine data (CMD-n) with the configured machine data collection rate (CR) to the data acquisition unit (3).

7. Method according to claim 5 or 6, **characterized, in that** the configuration of the machine data collection rate (CR) in the data source unit (2-n) is changed during machine operation by setting a new machine data collection rate (CR) in the sampling point (SPp).

8. Method according to claim 6, **characterized, in that** the configuration of the selection of which machine data (MD) is collected in the data source unit (2-n) is changed during machine operation by changing the preprocessing function (Fq) in the sampling point (SPp).

9. Method according to any of claims 1 to 8, **characterized, in that** the data processing software executed in the data acquisition unit (3) at least partly configures the data interface (4-n) via a configuration interface (Cln) of the data source unit (2-n).

10. Method according to any of claims 1 to 9, **characterized in that** the data interface (4-n) of the data source unit (2-n) provides a list of all machine data (MD) available in the data source unit (2-n) to the data acquisition unit (3), **in that** the data processing software of the data acquisition unit (3) specifies which machine data (MD) from the list of all available machine data (MD) it requires and with which machine data collection rate (CR) the machine data (MD) is to be collected, **and in that** the data interface (4-n) of the data source unit (2-n) is configured to collect the required machine data (MD) with the required machine data collection rate (CR) as required by the data processing software executed in the data acquisition unit (3) via a configuration interface (Cln) of the data source unit (2-n).

11. Method according to claim 10, **characterized, in that** the data interface (4-n) of the data source unit (2-n) further provides a list (F) of all available preprocessing functions (Fq) for preprocessing machine data (MD), **in that** the data processing software further specifies with which preprocessing function (Fq) the machine data (MD) is to be preprocessed by the data source unit (2-n) before the machine data (MD) is sent to the data acquisition unit (3) as collected machine data (CMD-n), **and in that** the data interface (4-n) of the data source unit (2-n) is configured to preprocess the machine data (MD) as specified by the data processing software via the configuration interface (Cln) of the data source unit (2-n).

12. Method according to any of claims 1 to 11, **characterized, in that** the data interface (4-n) in the data source unit (2-n) comprises a data buffer (B), wherein the data source unit (2-n) stores collected machine data (CMD-n) in the data buffer (B), **and in that** the data acquisition unit (3) receives collected machine data (CMD-n) from the data buffer (B) of the data source unit (2-n).

13. Method according to claim 12, **characterized, in that** the data source unit (2-n) sends stored collected machine data (CMD-n) from the data buffer (B) to the data acquisition unit (3) in predefined time steps, **or in that** the data acquisition unit (3) requests the data source unit (2-n) to send stored collected machine data (CMD-n) from the data buffer (B) to the data acquisition unit (3).

14. Data source unit for collecting machine data (MD), the data source unit (2-n) having a data interface (4-n) arranged to connect a data acquisition unit (3) to the data source unit (2-n) and having a sensor interface (Sin) arranged to connect a number of machine sensors (MSi) to the data source unit (2-n), wherein the data interface (4-n) of the data source unit (2-n) is arranged for configuration of the selection of which machine data (MD) is collected in the data source unit (2-n) and/or of the machine data collection rate (CR) of the machine data (MD) collected in the data source unit (2-n) during the machine operation.

15. Arrangement for the acquisition of machine data (MD) of a machine (6) at least during machine operation, wherein the arrangement (1) comprises a data source unit (2-n) collecting machine data (MD) and a data acquisition unit (3) acquiring collected machine data (CMD-n), wherein the data source unit (2-n) is connected to the data acquisition unit (3) via a data interface (4-n) of the data source unit (2-n) and the data source unit (2-n) is arranged to send collected machine data (CMD-n) via the data interface (4-n) to the data acquisition unit (3), wherein the data acquisition unit (3) is arranged to execute data processing software that processes collected machine data (CMD-n) received from the data source unit (2-n), wherein it is configured in the data interface (4-n) of the data source unit (2-n) which machine data (MD) is collected and with which machine data collection rate (CR) this machine data (MD) is collected, **characterized, in that** the data interface (4-n) of the data source unit (2-n) is provided with a configuration interface (Cln) for configuration of the selection of which machine data (MD) is collected in the data source unit (2-n) and/or of the machine data collection rate (CR) of the machine data (MD) collected in the data source unit (2-n) during the machine operation.
